# EUROPÄISCHE PATENTSCHRIFT

(11) **EP 4 372 370 B1**
(45) Veröffentlichungstag und Bekanntmachung des Hinweises auf die Patenterteilung: **28.01.2026**
(21) Anmeldenummer: 23208824.5
(22) Anmeldetag: 09.11.2023
(51) Int. Cl.: G01N 27/04, A44B 18/00

(54) **SENSORVORRICHTUNG**
SENSOR DEVICE
DISPOSITIF DE CAPTEUR

(30) Priorität: 18.11.2022 DE 102022004262
(43) Veröffentlichungstag der Anmeldung: 22.05.2024
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Kohler Schmid Möbus Patentanwälte

(56) Entgegenhaltungen:
- EP-A1- 2 547 607
- EP-A1- 3 192 482
- EP-A2- 1 973 440
- JP-A- S54 133 196

## Beschreibung

Die Erfindung betrifft eine Sensorvorrichtung zur Bestimmung der Feuchte unter Verwendung einer elektrischen Leitfähigkeitsmessung, wobei ein nichtleitender Träger einzelne elektrische Leiter aufweist, wobei der jeweilige elektrische Leiter (38) integraler Bestandteil eines Haftverschlussteils (8) ist und wobei der elektrische Widerstand zwischen den elektrischen Leitern von der Menge der auf dem Träger und den elektrischen Leitern befindlichen Feuchtigkeit abhängig ist.

Durch EP 0 403 994 B1 ist ein kapazitiver Feuchtesensor bekannt, bestehend aus einem Kondensator mit wenigstens zwei die Elektroden bildenden metallischen Schichten, von welchen wenigstens eine wasserdampfdurchlässig ist, wobei zwischen den Elektroden ein feuchteempfindlicher Polymerfilm als Dielektrikum vorgesehen ist.

Die Veränderung der Kapazität des derartig bekannten Feuchtesensors in Gegenwart von Luft unterschiedlichen Feuchtegehaltes beruht darauf, dass die in der Luft befindlichen Wassermoleküle in den das Dielektrikum bildenden Polymerfilm diffundieren und damit die Dielektrizitätskonstante und folglich den Kapazitätswert des derart gebildeten Kondensators in messbarer Weise verändern.

Durch DE 195 19 099 Cl ist ein weiterer Feuchtesensor bekannt, wobei auf einem nichtleitenden Träger, vorzugsweise der Windschutzscheibe eines Kraftfahrzeuges, Elektroden aufgebracht sind und wobei der Widerstand zwischen den Elektroden von der Menge der auf dem Träger und den Elektroden befindlichen Feuchte abhängig ist, die aus Leiterbahnen hoher elektrischer Leitfähigkeit bestehen, die von einer Widerstandsschicht geringer elektrischer Leitfähigkeit bedeckt sind. Mit dem bekannten Feuchtesensor können insbesondere diejenigen Feuchtemengen die zur Steuerung von Scheibenwischern relevant sind in zuverlässiger Weise ermittelt werden.

EP 3 192 482 A1 betrifft eine Vorrichtung zur Erkennung von Feuchtigkeit für eine Vorrichtung zur Überwachung eines Zugangs zu einem Patienten. Ein Abschnitt der Vorrichtung ist dabei zu einer Manschette verformbar, welche in wieder lösbarer Weise an den Umfang einer Schlauchleitung angelegt werden kann, wobei die Vorrichtung zu diesem Zweck Befestigungsmittel aufweist. Die Befestigungsmittel weisen in einer Ausführungsvariante je einen mit einer Klebe- oder Adhäsionsschicht versehenen Streifen auf. Die Vorrichtung weist weiterhin bevorzugt eine in ein textiles Gewebe integrierte elektrisch leitende Struktur auf, welche zur Feuchtigkeitserkennung genutzt wird. Die elektrisch leitende Struktur kann dabei durch leitfähige Kett- und Schussfäden des Gewebes gebildet sein.

Ausgehend von diesem Stand der Technik liegt der Erfindung die Aufgabe zugrunde eine Sensorvorrichtung zur Bestimmung der Feuchte zu schaffen, die gegenüber den bekannten Lösungen vielfältigst einsetzbar ist. Eine dahingehende Aufgabe löst eine Sensorvorrichtung mit den Merkmalen des Patentanspruches 1 in seiner Gesamtheit.

Dadurch, dass der jeweilige elektrische Leiter integraler Bestandteil eines Haftverschlussteils ist, ist eine Sensorvorrichtung geschaffen, die sich vielfältigst einsetzen lässt, indem sie sich eben vor Ort aufgrund des Verschlusscharakters des Haftverschlussteiles nahezu beliebig in wieder lösbarer Weise anbringen lässt. Ein solches Haftverschlussteil ohne den jeweiligen elektrischen Leiter ist üblicherweise Bestandteil eines fast beliebig oft zu lösenden Verschlussmittels für das die Schutzrechtsinhaberin unter der Markenbezeichnung Kletten^{®} sowohl in der Fachwelt als auch bei Verbrauchern in hohem Maße bekannt geworden ist.

Das Haftverschlussteil mit den elektrischen Leitern lässt sich bevorzugt mit Widerhäkchen versehen mit sich selbst verhaken und dergestalt als eigenständige Lösung überall dort anbringen, wo man eben eine Feuchtebestimmung vornehmen möchte. Auch an schwer zugänglichen Stellen lässt sich die Sensorvorrichtung mit dem flexibel ausgestalteten Haftverschlussteil für eine Feuchtedetektion zwanglos und in wieder lösbarer Weise anbringen. Das derart repositionierbar ausgestaltete Haftverschlussteil lässt sich auch extra dünn als mikroextrudierter Folienverschluss mit dreidimensionaler Struktur gestalten, so dass ein hohes Maß an Flexibilität erreicht ist. Auch erweist sich ein solches Haftverschlussteil mit dem jeweiligen elastischen Leiter als elastisch und ist sowohl temperatur- als auch waschbeständig. Je nach eingesetztem Kunststoffmaterial für den nichtleitenden Träger ist darüber hinaus das Haftverschlussteil mit seinem jeweiligen elektrischen Leiter gegenüber Chemikalien resistent.

Bei der erfindungsgemäßen Sensorvorrichtung besteht das Haftverschlussteil aus einem Grundgewebe aus Kett- und Schussfäden, das von mindestens einem Funktionsfaden zumindest teilweise durchgriffen ist, der teilweise über das Grundgewebe vorstehend die einzelnen Verschlusselemente ausbildet und als jeweils weiterer Funktionsfaden ist der elektrische Leiter in das Grundgewebe mit eingewoben. Neben einer solchen gewebten Struktur für das Haftverschlussteil lässt sich dieses auch in gestrickter Ausführung erhalten oder in einer alternativen Ausführungsform als gegossenes Mikroreplikationsprodukt, wobei dann die elektrischen Leiter zumindest teilweise freiliegend in das gegossene, nichtleitende Trägergrundmaterial einzubetten sind. In jedem Fall lässt sich ein flächenförmiges, insbesondere bandförmiges, Haftverschlussteil als gewebte Verschlusskomponente in kostengünstiger Weise realisieren, wobei der elektrische Leiter insoweit partiell freiliegend in das Grundgewebe mit eingewoben ist. Dergestalt lassen sich fortlaufend große Mengen an Sensorvorrichtungen erhalten und durch Abtrennen vom Band von der Länge her konfektionieren.

Bei einer besonders bevorzugten Ausführungsform der erfindungsgemäßen Sensorvorrichtung ist vorgesehen, dass der eine Funktionsfaden einzelne Schlaufen ausbildet, die zur Bildung von Hakenelementen aufgeschnitten und vorzugsweise an den derart erhaltenen Enden einer Wärmebehandlung unterzogen kopfseitige Verdickungen ausbilden. Die angesprochenen kopfseitigen Verdickungen bilden dabei regelmäßig pilzartige Verschlussköpfe für das Haftverschlussteil aus, die besonders gut mit einem geeigneten Vlies- oder Flauschmaterial eines anderen oder mit demselben Haftverschlussteil verhaken können. So kann das Haftverschlussteil mit den elektrischen Leiterbahnen auf der einen Seite die Hakenelemente aufweisen und auf der anderen gegenüberliegenden Seite ein Flausch- oder Schlaufenmaterial mit dem die Hakenelemente entsprechend verhaken können. Auch besteht die Möglichkeit auf ein und derselben Seite sowohl Haken als auch Schlaufen- oder Flauschelemente zu kreieren, um dergestalt einen dauerhaft wiederschließbaren Verschlussmechanismus auszubilden.

Besonders bevorzugt ist vorgesehen, dass der jeweils weitere Funktionsfaden als linienförmiger elektrischer Leiter als Kettfaden in das Grundgewebe eingewoben ist.

Besonders gute Ergebnisse lassen sich erreichen, wenn der jeweils weitere Funktionsfaden der Sensorvorrichtung aus einem nichtrostenden Multifilament-Edelstahlgarn besteht, wobei der nichtleitende Träger respektive das Grundgewebe des Haftverschlussteils aus Kunststoffmaterial besteht, wie beispielsweise Polyamid oder Polyester. Die nichtleitenden Garne des Haftverschlussteils sind bevorzugt aus hydrophoben Materialien gebildet, wie Polypropylen und/oder Polyester, und dahingehende hydrophobe Materialien trocknen schneller, so dass der Sensor entsprechend rasch erneut wieder für die Nässedetektion zur Verfügung steht.

Bei einer weiteren bevorzugten Ausführungsform der erfindungsgemäßen Sensorvorrichtung ist vorgesehen, dass die weiteren Funktionsfäden paarweise einander zugeordnet mit vorgebbarem Abstand voneinander parallel im Haftverschlussteil verlaufen, wobei bevorzugt das Haftverschlussteil als flächenförmiges flexibles Band ausgebildet ist, entlang dessen beiden Längsrändern jeweils der weitere Funktionsfaden in Form eines elektrischen Leiters über die gesamte Bandlänge verläuft. Dergestalt ist eine definierte Messsituation geschaffen, was es erleichtert reproduzierbare Messergebnisse mit der erfindungsgemäßen Sensorvorrichtung für verschiedenste Messeinsätze zu erhalten.

Die elektrisch leitfähigen weiteren Funktionsfäden sind vorzugsweise rückseitig mit einer nichtleitfähigen Polyurethan-Schicht fest verklebt, an die sich vorzugsweise ein mit dieser Schicht fest verbundener Flächenhaftverschlussteil anschließt, das besonders bevorzugt mit den Verschlusselementen des Haftverschlussteils selbst einen wiederlösbaren Kletthaftverschluss ausbildet. Das dahingehende Flächenhaftverschlussteil kann ein sogenannter Velours sein, der unter Bildung des Kletthaftverschlusses bei Bedarf in Eingriff bringbar ist mit den pilzförmigen Verschlusselementen des Grundgewebes. Die nichtleitenden Schichten sind von Bedeutung, da dann sichergestellt ist, dass kein Kurzschluss entsteht, wenn das Haftverschlussteil mit seinen integral aufgenommenen Leitern in Kontakt mit metallischen Bauteilen wie einem Metallrohr kommt, was regelmäßig der Fall ist, wenn die Sensoreinrichtung für die Nässedetektion an dahingehenden metallischen Bauteilen angebracht ist.

Zum Auslesen der Sensorwerte ist bevorzugt vorgesehen, dass auf dem bandförmigen Haftverschlussteil elektrische Kontaktierungsstellen ein- oder aufgebracht sind, in die der jeweils weitere Funktionsfaden in Form des elektrischen Leiters ausmündet. Dergestalt ist ein besonders platzsparender Messwertabgriff auf dem Haftverschlussteil erreicht. Die Kontaktierungsstellen können Lötstellen sein oder bevorzugt aus SteckerBuchsen-Lösungen bestehen.

Bei einer weiteren besonders bevorzugten Ausführungsform der erfindungsgemäßen Sensorvorrichtung ist vorgesehen, dass an den jeweils weiteren Funktionsfaden sprich dem elektrischen Leiter eine Auswerteeinrichtung für die Messdaten angeschlossen ist. Neben einer kapazitiven Messdatenauswertung, wie eingangs im Stand der Technik vorgestellt, besteht auch die Möglichkeit mit Hilfe einer Spannungsquelle elektrischen Strom durch einen elektrischen Leiter der Sensorvorrichtung zu schicken und mit Hilfe einer Anzeigeeinrichtung, die an beide elektrischen Leiter angeschlossen ist, wird das Maß des fließenden elektrischen Stroms ermittelt, das dann ein Maß für die jeweilige Feuchtigkeit ist, die aufgrund der Feuchtigkeit der umgebenden Atmosphäre auf dem ansonsten nichtleitenden Träger herrscht. Insoweit ist eine elektrische Widerstandsmessung realisiert und je höher die Feuchte, umso geringer der elektrische Widerstand und umso höhere Messwertanzeigen ergeben sich an der Anzeigeeinrichtung.

Die Erfindung betrifft auch ein Haftverschlussteil als Teil einer Sensorvorrichtung wie vorstehend vorgestellt mit nichtleitenden Funktionsfäden, die von einem nichtleitenden Grundgewebe vorstehend einzelne Verschlusselemente ausbilden und mit elektrisch leitenden weiteren Funktionsfäden als einem integralen Bestandteil des dahingehenden Grundgewebes. Dergestalt kann ein Haftverschlussteil als Grundkomponente später vor Ort mit einer Vielzahl unterschiedlicher Sensor-Auswerteeinrichtungen gekoppelt werden. Dies hat so keine Entsprechung im Stand der Technik.

Im Folgenden wird die erfindungsgemäße Sensorvorrichtung anhand eines Ausführungsbeispiels nach der Zeichnung näher erläutert. Dabei zeigen in prinzipieller und nicht maßstäblicher Darstellung die
- Figur 1: das Gewebebild der Sensorvorrichtung mit eingebrachten elektrischen Leitern;
- Figur 2: eine Seitendarstellung auf das flächige Haftverschlussteil nach der Figur 1; und
- Figur 3: in stark vereinfachter Weise eine Draufsicht auf Abschnitte einer bandförmig ausgebildeten Sensorvorrichtung mit angeschlossener Auswerteeinrichtung.

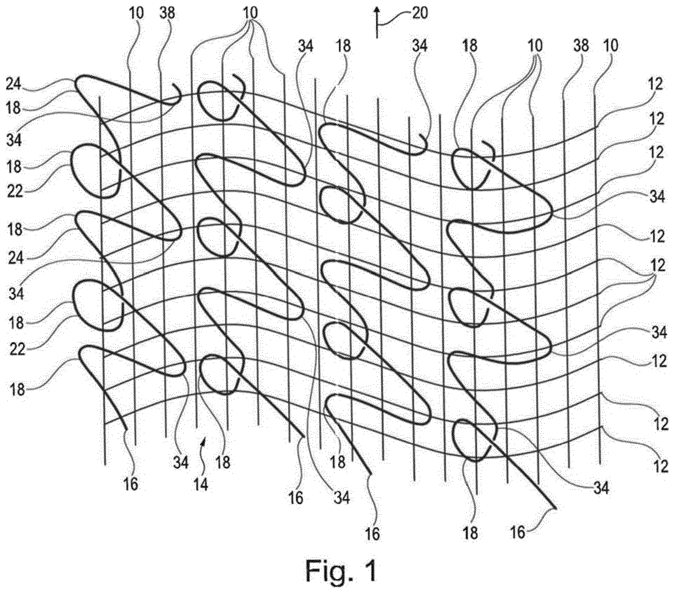

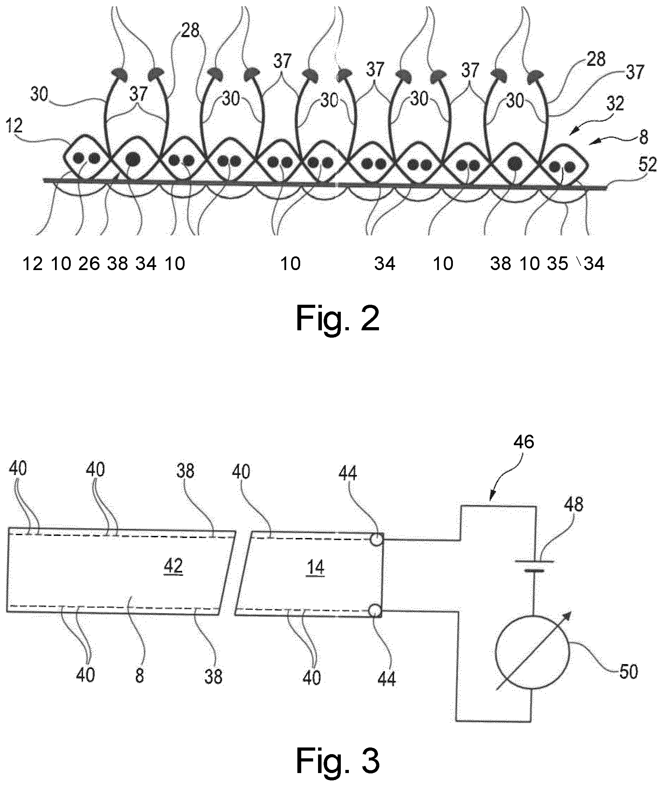

Die Figur 1 zeigt ausschnittsweise eine Draufsicht auf ein flächenförmiges Haftverschlussteil, wie es in der Figur 3 mit 8 bezeichnet ist, als Basiskomponente für die erfindungsgemäße Sensorvorrichtung. Das dahingehende Haftverschlussteil 8 lässt sich innerhalb der Bildebene sowohl in der einen wie auch in der anderen Bildrichtung beliebig verlängern und die geometrischen Abmessungen des Flächengebildes sind abhängig von den Vorgaben der Webeinrichtung, auf der das Haftverschlussteil gefertigt wird.

Das Haftverschlussteil 8 besteht aus Kettfäden 10 und Schussfäden 12, die in Queranordnung miteinander verwebt das Grundgewebe 14 für das Haftverschlussteil 8 bilden. Des Weiteren ist das Grundgewebe 14 mit Funktionsfäden 16 in der Art von Polfäden ausgebildet und der dahingehende jeweilige Funktionsfaden 16 bildet für das flächenförmige Haftverschlussteil die einzelnen Verschlusselemente 18 aus. Ferner ist in Blickrichtung auf die Figur 1 gesehen auf ihrer Oberseite mit einem Pfeil 20 die Produktionsrichtung für das Haftverschlussteil 8 im Rahmen der Webherstellung wiedergegeben.

Bei der gezeigten Anordnung nach der Figur 1 sind die jeweiligen Schussfäden 12 in der Art einer Sinus- oder Kosinuswelle bogenförmig ausgebildet und an den Kreuzungsstellen zwischen Kettfäden 10 und Schussfäden 12 verlaufen die Kettfäden 10 parallel zur Produktionsrichtung 20 sowie parallel zueinander in geradliniger Anordnung. Durch die wellen- oder bogenförmige Ausgestaltung der Schussfäden 12 wird ein definierter mechanischer Widerstand geschaffen, der einer möglichen Außer-Eingriff-Bewegung der korrespondierenden Verschlusselemente entgegenwirkt. Es ist aber selbstverständlich, dass die angesprochenen Schussfäden 12 auch geradlinig parallel zueinander verlaufen können und die dahingehende Ausgestaltung bildet die Grundlage für die bandförmige Sensorvorrichtung nach der Figur 3. Der jeweilige Funktionsfaden 16 verläuft zumindest teilweise zwischen zwei benachbarten Kettfäden 10 im Grundgewebe 14, wobei bei der in der Figur 1 gezeigten Anordnung in der Reihe dabei jeder vierte Schussfaden 12 untergriffen und die anderen Schussfäden 12 übergriffen sind. An der Stelle des jeweiligen Untergriffs des Grundgewebes 14 bildet der Funktionsfaden 16 eine zugehörige darüberliegende Schlaufe 22 aus, wobei nachfolgend unmittelbar eine weitere Schlaufe 24 ausgebildet ist, so dass sich hieraus eine Art V-Bindung ergibt. Es sind hier aber auch andere Bindungsarten denkbar, beispielsweise das Einbinden des Funktionsfadens 16 in W-förmiger Art oder dergleichen.

Die genannten Schlaufen 22, 24 bilden die Verschlusselemente 18 und bleiben die Schlaufen 22, 24 wie in Figur 1 dargestellt geschlossen, entsteht dergestalt eine Art Flausch-Haftverschlussteil. Für den Erhalt von haken- oder pilzartigen Verschlusselementen 28 werden die Schlaufen 22, 24 an der Seite, im Verhältnis von etwa ein Drittel zu zwei Drittel, aufgeschnitten, so dass dergestalt dann ein Verschlusshaken 30 entsteht und mit Umlegen der Oberseite 32 des Grundgewebes 14 auf die Unterseite 26 des Bandes 8 können die Verschlusshaken 30 in wieder lösbaren Eingriff mit unteren Schlaufenelementen 34 eines zusätzlich angebrachten Velours 35 kommen, der mit dem Grundgewebe 14 über eine Klebstoffschicht 52, auf dessen Unterseite, fest verbunden ist, die vorzugsweise aus Polyurethan besteht. Die Klebstoffschicht 52 umfasst teilweise die Kontaktleiter 38 von der Rückseite her und bildet insoweit rückwärtig zum Velours 35 hin eine elektrische Isolationsschicht aus. Dabei bleibt der jeweilige Leiter 38 nach oben hin aber frei, um Feuchte detektieren zu können. Sofern man den angesprochenen Trenn- oder Schneidvorgang für die einzelnen Schlaufen 22, 24 thermisch durchführt und insbesondere die freien Schlaufenenden dann noch weiter erhitzt, schrumpfen die Enden zusammen und bilden dabei aufgrund der Oberflächenspannung des Kunststoffmaterials pilzartige Verschlussköpfe 36 aus, die nach allen Seiten über ein zugehöriges Stielteil 37 vorstehen. Auch ist es dergestalt möglich, auf der Oberseite 32 kombinierte Verschlüsse, also solche mit haken- und schlaufenförmigen Elementen auf einer gemeinsamen Seite des Grundgewebes 14 zu erzeugen, was die Verhaftungsmöglichkeiten mit korrespondierend ausgestalteten Schlaufen- und Hakenelementen eines weiteren Haftverschlussteils eines Kletten^{®} Haftverschlusses ermöglicht (nicht dargestellt). Hierzu sind dann eben nicht alle Schlaufen 22, 24 für eine Haken- oder Pilzkopfbildung aufgeschnitten, sondern bleiben als schlaufenförmiges Eingriffsmaterial bestehen.

Wie sich des Weiteren aus der Figur 1 ergibt, sind neben den einen Funktionsfäden 16 in Form der einzelnen Schlaufen 22, 24 die weiteren Funktionsfäden 38 in Form von elektrischen Leitern als Kettfaden eingebracht, die also vergleichbar den Kettfäden 10 parallel zu diesen entlang des sonstigen Grundgewebes 14 verlaufen, wobei der jeweils weitere, elektrisch leitende Funktionsfaden 38 alternierend die jeweiligen Schussfäden 12 über- oder untergreift und dergestalt fest im Grundgewebe 14 verankert ist.

Wie insbesondere die Darstellung nach der Figur 2 zeigt, kann ein einzelner Kettfaden 10 auch aus einem Kettfadenpaar bestehen oder sonstwie mehrfädig sein. Dies gilt auch für die Schussfäden 12, die gemäß der Querschnitts- oder Ansichtsdarstellung nach der Figur 2 in alternierender Reihenfolge jeweils ein Paar von Kettfäden 10 über- oder untergreifen. Der jeweilige Funktions- oder Polfaden 16 übergreift dabei unter Auslassung jeweils eines Schussfadenpaares 12 die beiden darauffolgenden Schussfadenpaare 12 in der gezeigten Reihe sowie jeweils einen elektrischen Leiter als dem weiteren Funktionsfaden 38.

Das in Form des Bandes 8 gemäß der Darstellung nach der Figur 3 konfektionierte Grundgewebe 14 der Figur 1 weist demgemäß entlang seinen beiden Längsrändern jeweils benachbart den weiteren Funktionsfaden 38 auf, der mehr oder minder in das Grundgewebe 14 eingebettet auf jeden Fall zur Umgebung hin freiliegende Stellen 40 aufweist, die mit Feuchtigkeit in Berührung gebracht werden können, die sich auf dem insoweit flexiblen, nichtleitenden Band 42 ablagern können. Da das Band 42 nicht in seiner gesamten Länge wiedergegeben werden kann, ist es gemäß der Darstellung nach der Figur 3 unterbrochen dargestellt. Wie sich des Weiteren aus der Figur 3 ergibt, münden die freien Enden des jeweiligen weiteren Funktionsfadens 38 in eine Kontaktierungsstelle 44 aus, an die eine Auswerteeinrichtung angeschlossen ist. Anstelle einer Kontaktierung mittels Lötstellen, können die Kontaktierungsstellen 44 auch aus einem Buchsenteil bestehen, in das die Auswerteeinrichtung mittels zugeordneter Stecker einsteckbar ist (nicht dargestellt).

Mit Hilfe einer Spannungsquelle 48 regelmäßig in Form einer Gleichstrombatterie wird elektrischer Strom durch die Sensorvorrichtung nach der Figur 3 über deren jeweiligen elektrischen Leiter als den weiteren Funktionsfäden 38 geschickt und mit Hilfe einer Anzeigeeinrichtung 50 wird das Maß des fließenden elektrischen Stroms ermittelt, das auch ein Maß für die jeweilige Feuchtigkeit ist, die aus der umgebenden Atmosphäre sich auf dem Band 42 nebst deren paarweise zueinander angeordneten elektrischen Leitern 38 verteilt.

Die bandförmige Sensorvorrichtung nach der Figur 3 kann auch ohne Auswerteeinheit 46 verwendet werden und beispielsweise an eine Steuerung einer üblichen Haushaltswaschmaschine angeschlossen werden und bei einer angebrachten Sensorvorrichtung auf der Unterseite der dahingehenden Waschmaschine lässt sich ein ungewollter Feuchtigkeitsaustritt bodenseitig detektieren und die Maschine abstellen respektive deren Wasserzulauf. Für die dahingehende Feuchteerfassung hat es sich als vorteilhaft erwiesen die weiteren Funktionsfäden 38 elektrisch gut leitend auszubilden, beispielsweise durch Verwendung von verzinkten Kupferdrähten, wie sie zur Leitung von Strom üblicherweise eingesetzt werden.

Da das Band 42 ausgesprochen flexibel ist und auf sich selbst schlaufenförmig umgelenkt in wieder lösbarer Weise an Drittbauteilen nahezu beliebiger Ausgestaltung festlegen lässt, wäre eine andere bevorzugte Anwendung, wenn ein solches Band 42 eine Muffenverbindung bei Rohrleitungen umfassen würde, um dergestalt einen möglichen Wasseraustritt im Bereich der Muffenverbindung detektieren zu können. Wenn dann als Auswerteeinrichtung eine solche eingesetzt wird, die drahtlos eine Messwerteübertragung ermöglicht, kann von zentraler Stelle aus, eine Feuchteüberwachung stattfinden und dabei mehrere solcher Bänder 42 überwacht werden.

Aufgrund der speziellen Gewebeausgestaltung für das Grundgewebe 14 ist darüber hinaus sichergestellt, dass sich im Laufe des Betriebes mit der Sensorvorrichtung die offene Gewebestruktur des Bandes 42 sich nicht mit Wasserdampf sättigen kann, was die Messempfindlichkeit stark reduzieren könnte. Vielmehr kommt es aufgrund der offenen Gewebestruktur auch immer wieder zu einem Abtrocknen und der insoweit dann regenerierte Sensor steht messfehlerfrei für erneute Feuchtemessungen zur Verfügung. Auch kann das Fasermaterial zumindest teilweise hydrophob ausgestaltet oder beschichtet sein, so dass auch insoweit für die Messung schädliche Restfeuchte entfernt wird.

Es ist selbstredend, dass die vorstehend vorgestellte Sensorvorrichtung nur eine mögliche Ausführungsform einer Vielzahl von Bauformen ist. So wäre es denkbar mehrere verschiedene Gewebe miteinander zu kombinieren, so dass sich unterschiedlichste Arten von Gewebeoberseiten 32 und Gewebeunterseiten 26 ergeben können. Ferner besteht auch die Möglichkeit das Haftverschlussteil im Gießverfahren (Chill-Roll-Verfahren) als Mikroreplikationsteil zu erhalten und die elektrischen Leiter als den weiteren Funktionsfäden 38 zumindest teilweise freiliegend in die Gussmasse mit einzubringen.

Da die Bandlösung nach der Figur 3 in nahezu beliebigen Längen konfektionierbar ist, besteht auch die Möglichkeit nicht für eine spezielle Verwendung individualisiert das Band als Verkaufsprodukt anzubieten und der jeweilige Abnehmer kann dann nach eigenem Gusto frei entscheiden, für was er die Sensorvorrichtung tatsächlich verwenden möchte. Dies hat so keine Entsprechung im Stand der Technik.

## Patentansprüche

1. Sensorvorrichtung zur Bestimmung der Feuchte unter Verwendung
einer elektrischen Leitfähigkeitsmessung, umfassend einen nichtleitenden Träger, wobei der nichtleitende Träger einzelne elektrische Leiter (38) aufweist, wobei der jeweilige elektrische Leiter (38) integraler Bestandteil eines Haftverschlussteils (8) ist und wobei der elektrische Widerstand zwischen den elektrischen Leitern (38) von der Menge der auf dem Träger und den elektrischen Leitern (38) befindlichen Feuchtigkeit abhängig ist, **dadurch gekennzeichnet, dass** das Haftverschlussteil (8) aus einem Grundgewebe (14) aus Kett (10)- und Schussfäden (12) besteht, das von mindestens einem Funktionsfaden (16) zumindest teilweise durchgriffen ist, der teilweise über das Grundgewebe (14) vorstehend Verschlusselemente (18) ausbildet und dass als jeweils weiterer Funktionsfaden (38) der elektrische Leiter in das Grundgewebe (14) mit eingewoben ist.

2. Sensorvorrichtung nach Anspruch 1, **gekennzeichnet durch** Verschlusshaken (30), wobei die Verschlusshaken (30) dadurch ausgebildet werden, dass Schlaufen (22, 24) des Funktionsfadens (16) an der Seite im Verhältnis von etwa ein Drittel zu zwei Drittel aufgeschnitten werden, wobei bevorzugt an den freien Schlaufenenden Verschlussköpfe (36) ausgebildet sind, die dadurch ausgeformt werden, dass das Trennen der Schlaufen (22, 24) thermisch durchgeführt wird und die freien Schlaufenenden weiter erhitzt werden.

3. Sensorvorrichtung nach einem der Ansprüche 1 oder 2, **dadurch gekennzeichnet, dass** der jeweils weitere Funktionsfaden (38) als Kettfaden (10) in das Grundgewebe (14) eingewoben ist.

4. Sensorvorrichtung nach einem der vorhergehenden Ansprüche, **dadurch gekennzeichnet, dass** der jeweils weitere Funktionsfaden (38) aus einem nichtrostenden Multifilament-Edelstahlgarn besteht.

5. Sensorvorrichtung nach einem der vorhergehenden Ansprüche, **dadurch gekennzeichnet, dass** die weiteren Funktionsfäden (38) paarweise einander zugeordnet mit vorgebbarem Abstand voneinander parallel im Haftverschlussteil (8) verlaufen.

6. Sensorvorrichtung nach einem der vorhergehenden Ansprüche, **dadurch gekennzeichnet, dass** das Haftverschlussteil (8) als flächenförmiges, flexibles Band (42) ausgebildet ist, entlang dessen beiden Längsrändern jeweils ein weiterer Funktionsfaden (38) über die gesamte Bandlänge verläuft.

7. Sensorvorrichtung nach einem der vorhergehenden Ansprüche, **dadurch gekennzeichnet, dass** die elektrisch leitfähigen, weiteren Funktionsfäden (38) rückseitig mit einer nichtleitfähigen Polyurethan-Schicht (52) fest verklebt sind, an die sich vorzugsweise ein mit dieser Schicht (52) fest verbundener Flächenhaftverschlussteil (35) anschließt.

8. Sensorvorrichtung nach Anspruch 7, wobei der Flächenhaftverschlussteil (35) mit den Verschlusselementen (18) des Haftverschlussteils (8) einen wieder lösbaren Kletthaftverschluss ausbildet.

9. Sensorvorrichtung nach einem der vorhergehenden Ansprüche, **dadurch gekennzeichnet, dass** auf dem bandförmigen Haftverschlussteil (8) elektrische Kontaktierungsstellen (44) ein- oder aufgebracht sind, in die der jeweils weitere Funktionsfaden (38) ausmündet.

10. Sensorvorrichtung nach einem der vorhergehenden Ansprüche, **dadurch gekennzeichnet, dass** an den jeweils weiteren Funktionsfaden (38) eine Auswerteeinrichtung (46) für die Messdaten angeschlossen ist.

## Claims

1. Sensor device for determining moisture using an electrical conductivity measurement, comprising a non-conducting support, wherein the non-conducting support has individual electrical conductors (38), wherein the respective electrical conductor (38) is an integral component of a hook-and-loop fastener part (8) and wherein the electrical resistance between the electrical conductors (38) is dependent upon the amount of moisture present on the support and the electrical conductors (38), **characterized in that** the hook-and-loop fastener part (8) is made of a base fabric (14), made of warp (10) and weft threads (12), through which passes, at least partially, at least one functional thread (16) which partially forms the fastener elements (18) protruding above the base fabric (14), and **in that** the electrical conductor is woven into the base fabric (14) as a respective further functional thread (38).

2. Sensor device according to claim 1, **characterized by** hook elements (30), wherein the hook elements (30) are formed in that the loops (22, 24) of the functional thread (16) are cut open on the side in a ratio of approximately one third to three thirds, wherein terminal thickenings (36) are preferably formed at the free loop ends, which are formed in that the loops (22, 24) are separated thermally and the free loop ends are further heated.

3. Sensor device according to one of claims 1 or 2, **characterized in that** each further functional thread (38) is woven into the base fabric (14) as a warp thread (10).

4. Sensor device according to one of the preceding claims, **characterized in that** each further functional thread (38) consists of a non-rusting, multifilament stainless steel yarn.

5. Sensor device according to one of the preceding claims, **characterized in that** the further functional threads (38) run parallel in associated pairs at a prespecifiable distance from one another in the hook-and-loop fastener part (8).

6. Sensor device according to one of the preceding claims, **characterized in that** the hook-and-loop fastener part (8) is designed as a flat, flexible strip (42), along whose two longitudinal edges a further functional thread (38) runs over the entire strip length in each case.

7. Sensor device according to one of the preceding claims, **characterized in that** the electrically-conductive further functional threads (38) are firmly bonded on the rear side to a non-conductive polyurethane layer (52), which preferably adjoins a surface adhesion part (35), which is fixedly connected to this layer (52).

8. Sensor device according to claim 7, wherein the surface adhesion part (35) forms an again releasable hook-and-loop fastener with the fastener elements (18) of the hook-and-loop fastener part (8).

9. Sensor device according to one of the preceding claims, **characterized in that** electrical contacting points (44) are applied or incorporated into the strip-like hook-and-loop fastener part (8), in which the respective further functional thread (38) ends.

10. Sensor device according to one of the preceding claims, **characterized in that** an evaluation device (46) for the measurement data is connected to the respective further functional thread (38).

## Revendications

1. Dispositif de détection conçu pour déterminer l'humidité à l'appui d'une mesure de la conductivité électrique, incluant un support non conducteur, lequel support non conducteur comporte des conducteurs électriques (38) individuels, le conducteur électrique (38) respectif faisant partie intégrante d'une pièce (8) de fermeture auto-agrippante, et la résistance électrique entre lesdits conducteurs électriques (38) étant tributaire de la quantité d'humidité présente sur le support et sur lesdits conducteurs électriques (38), **caractérisé par le fait que** la pièce (8) de fermeture auto-agrippante est constituée d'un tissu de base (14) qui comprend des fils de chaîne (10) et des fils de trame (12) et est, au moins partiellement, traversé par au moins un fil fonctionnel (16) donnant naissance à des éléments de fermeture (18) faisant, en partie, saillie au-delà du tissu de base (14) ; et **par le fait que** ledit conducteur électrique est intégré par tissage dans ledit tissu de base (14), en tant que fil fonctionnel (38) additionnel.

2. Dispositif de détection selon la revendication 1, **caractérisé par** des crochets de fermeture (30), lesquels crochets de fermeture (30) sont constitués par sectionnement latéral provoquant, dans un rapport d'environ un tiers à deux tiers, l'ouverture de boucles (22, 24) du fil fonctionnel (16), donnant ainsi préférentiellement naissance, aux extrémités libres desdites boucles, à des têtes de fermeture (36) qui sont formées par séparation desdites boucles (22, 24) opérée thermiquement, et par poursuite du chauffage desdites extrémités libres des boucles.

3. Dispositif de détection selon l'une des revendications 1 ou 2, **caractérisé par le fait que** le fil fonctionnel additionnel (38) respectif est intégré par tissage dans le tissu de base (14), en tant que fil de chaîne (10).

4. Dispositif de détection selon l'une des revendications précédentes, **caractérisé par le fait que** le fil fonctionnel additionnel (38) respectif est constitué d'un filé multifilament en acier fin inoxydable.

5. Dispositif de détection selon l'une des revendications précédentes, **caractérisé par le fait que** les fils fonctionnels (38) additionnels s'étendent parallèlement dans la pièce (8) de fermeture auto-agrippante, suivant un agencement apparié, avec espacement mutuel pouvant être préétabli.

6. Dispositif de détection selon l'une des revendications précédentes, **caractérisé par le fait que** la pièce (8) de fermeture auto-agrippante est réalisée en tant que ruban flexible (42) de forme aplatie, le long des deux bords longitudinaux duquel un fil fonctionnel additionnel (38) respectif s'étend sur toute la longueur dudit ruban.

7. Dispositif de détection selon l'une des revendications précédentes, **caractérisé par le fait que** les fils fonctionnels additionnels (38) électriquement conducteurs sont assujettis par collage, par leur face postérieure, à une couche de polyuréthane (52) non conductrice à laquelle se rattache, de préférence, une pièce (35) de fermeture auto-agrippante en surface qui est reliée rigidement à cette couche (52).

8. Dispositif de détection selon la revendication 7, sachant que la pièce (35) de fermeture auto-agrippante en surface donne naissance, avec les éléments de fermeture (18) de la pièce (8) de fermeture auto-agrippante, à une fermeture libérable par auto-agriffage.

9. Dispositif de détection selon l'une des revendications précédentes, **caractérisé par le fait que** des zones (44) de mise en contact électrique, dans lesquelles le fil fonctionnel additionnel (38) respectif débouche, sont intégrées dans la pièce (8) de fermeture auto-agrippante en forme de ruban, ou appliquées sur cette dernière.

10. Dispositif de détection selon l'une des revendications précédentes, **caractérisé par le fait qu'**un appareil (46), dévolu à l'évaluation des données de mesure, est connecté au fil fonctionnel additionnel (38) respectif.
